# EUROPEAN PATENT APPLICATION

(11) **EP 4 625 874 A1**
(43) Date of publication of application: **01.10.2025**
(21) Application number: 24166916.7
(22) Date of filing: 27.03.2024
(51) Int. Cl.: H04L 9/08, H04L 9/32

(54) **INDUSTRIAL DEVICE COMPRISING A WALLET CONTAINING CREDENTIALS FOR ACCESSING INDUSTRIAL APPS**

(71) Applicant: Siemens Aktiengesellschaft, 80333 München (DE)
(72) Inventor: Aghaie, Anita, 81379 Munich (DE); Aschauer, Hans, 81829 München (DE); Klasen, Wolfgang, 85521 Ottobrunn (DE); Kumari, Ankita, 81549 München (DE); Maftun, Aliza, 81247 München (DE); Papagudi Subrahmanyam, Niranjana, 85540 Haar (DE); Passarelli, Anne, 80809 München (DE); Safieh, Malek, 81539 München (DE)
(74) Representative: Siemens Patent Attorneys

(57) **Abstract**

The industrial device contains a wallet containing credentials for accessing industrial apps and equipped with a master key securing the wallet. The wallet is cryptographically bound to the specific industrial device.

References:

[1] https://github.com/hyperledger/aries-rfcs/blob/main/concepts/0050-wallets/README.md

## Description

This invention relates to an industrial device comprising a wallet containing credentials for accessing industrial apps.

A wallet is conventionally used to receive, store, manage and share data on a computing device in a secure manner. Only the authorized entity can access, use, or modify the data stored in the wallet. A wallet may also store private/secret keys or other secret information confidentially.

Typically, a wallet master key encrypts the wallet like in the example implementation of a wallet described in Aries RFC 0050 [1]. The user of the wallet knows the corresp onding wallet master key or can derive it from a password known by him. In this way, only the intended user can access and use the wallet which contains identity data, credentials, etc. of the user.

It is possible to copy the wallet to another device and to use the wallet on the other device as the user knows the wallet master key or the password. The access to the wallet is bound to the user.

In the industrial environment, it may occur that different or counterfeited devices are used.

In this case, despite the use of wallets, the operation of such devices may still be insecure.

Thus, it is the problem of the invention to create an industrial device comprising a wallet containing credentials that may be used for accessing industrial apps, that is improved, particularly in view of the prior art. In particular, the industrial device should be operable in a much more secure way in terms of IT security and/or much safer in terms of IT safety.

This problem is solved with an industrial device comprising the features given in the independent claim. Further aspects of the invention are described in the dependent claims, the subsequent description and the drawings.

The industrial device according to the invention comprises a wallet containing credentials for accessing industrial apps and is equipped with a master key securing the wallet. The wallet is cryptographically bound to the specific industrial device. With the industrial device according to the invention, the wallet cannot be used on a different or counterfeit device, providing enhanced security for accessing industrial apps.

In a preferred aspect of the industrial device according to the invention, the wallet being cryptographically bound means that the master key is cryptographically bound to the specific industrial device. In this aspect of the invention, the cryptographic binding of the master key to the device ensures that only the correct device can access and use the wallet, preventing unauthorized access.

In an advantageous and optional aspect of the industrial device according to the invention, the master key is encrypted with a device-specific key. The encryption of the master key with a device-specific key enhances the security of the wallet and prevents unauthorized access to the master key. In particular, the wallet cannot be accessed on a different or counterfeit device, since on such different or counterfeiting devices, the device-specific key would not be available and hence the master key may not be used to access the wallet.

In a preferred aspect of the industrial device according to the invention, the device-specific key is stored in a secure storage such as a device specific secure storage, in particular a secure element. Storing the device-specific key in a secure storage, such as a device specific secure storage and/or a secure element, ensures that the key is protected and cannot be easily accessed, compromised or copied, enhancing the overall security of the wallet.

In an advantageous and optional aspect of the industrial device according to the invention, the device-specific key comprises a secret that is generated using intrinsic hardware properties and/or software properties of the specific device, particularly a device hardware fingerprint and/or a physical unclonable function. Generating the device-specific key using intrinsic hardware properties and/or software properties of the device, such as a hardware fingerprint or physical unclonable function, couples the device-specific key to the hardware of the device and makes the device-specific key more resistant to unauthorized duplication.

In a preferred aspect of the industrial device according to the invention, the wallet being cryptographically bound means that the credentials contained in the wallet comprise at least one wallet secret, and the at least one wallet secret is coupled to the specific device. Coupling the wallet secrets to the specific device ensures that the secrets cannot be accessed or used on a different device, providing enhanced security for the wallet.

In an advantageous and optional aspect of the industrial device according to the invention, the wallet secret is coupled to the specific device such that the wallet secret is stored inside a secure element of the specific device. Storing the wallet secret inside a secure element of the specific device provides a secure environment for storing and using the secret, so that unauthorized access or cloning of the secret to a different or counterfeit device is effectively prevented.

In a preferred aspect of the industrial device according to the invention, the industrial device is configured such that the usage of the at least one wallet secret is limited to the secure element. Limiting the usage of the wallet secret to the secure element ensures that the secret cannot be accessed or used outside of the secure environment, enhancing the security of the wallet.

In an advantageous and optional aspect of the industrial device according to the invention, the at least one wallet secret is coupled to the specific device such that the at least one wallet secret is encrypted with a device-specific key stored inside a secure element of the device. Encrypting the wallet secret with a device-specific key stored in a secure element binds the wallet to the specific device, so that unauthorized access or cloning of the secret to a different or counterfeit device is effectively prevented.

In a preferred aspect of the industrial device according to the invention, the wallet being cryptographically bound to the specific device means that the master key of the wallet is encrypted with a first device-specific key, and the at least one wallet secret is stored inside a secure element of the industrial device or at least one wallet secret is additionally encrypted with a second device-specific key. By having multiple device specific keys derived from more than a single trusted source or component of a device (e.g., the first device-specific key could come from a secure element while the second device specific key could come from a different trusted source like a physical unclonable function or from a trusted execution environment or another secure element), a stronger hardware binding is achieved. This provides a high barrier to cloning or transferring the wallet and its secrets to a different or counterfeit device

In an advantageous and optional aspect of the industrial device according to the invention, is a manufacturing device, a processing device, or a logistics device, and comprises a wallet containing credentials for accessing the respective industrial app, wherein the wallet is cryptographically bound to the specific industrial device, allowing for secure and trustworthy interactions between the device and the corresponding industrial app. This claim enables the industrial device to exclusively and securely access and interact with the specific industrial app, since the wallet is effectively prevented from being used on a different or counterfeit device.

This ensures trustworthiness and enhances the overall security of the device and its operations in the manufacturing, processing, or logistics domain.

In the following, the invention is described in more details using the attached drawings.
- Fig. 1: shows a first embodiment of the industrial device with a wallet being cryptographically bound to the specific industrial device schematically in a process diagram.
- Fig. 2: shows a second embodiment of the industrial device with a wallet being cryptographically bound to the specific industrial device schematically in a process diagram.
- Fig. 3: shows a third embodiment of the industrial device with a wallet being cryptographically bound to the specific industrial device schematically in a process diagram.
- Fig. 4: shows a fourth embodiment of the industrial device with a wallet being cryptographically bound to the specific industrial device schematically in a process diagram.

The invention as shown in the figure covers in particular three different approaches to achieve the device-binding for a device wallet:
In a first approach, which represents the first embodiment, the access to a wallet master key WMK of the wallet is bound to a device-specific key DSK.
In a second approach, the wallet secrets WS are bound themselves to the device.

This second approach can be realized in two different embodiments: in a second embodiment of the invention, the wallet secrets WS are created, stored, and used in a device-specific hardware secure element DSSE or in a hardware trusted module HTM.

In a third embodiment of the invention, that also details the second approach, the wallet secrets WS are wrapped with a device-specific key DSK inside a Secure Element SE.

In a third approach, that is detailed with the fourth embodiment of the invention, both the wallet master key WMK and wallet secrets WS are bound to the device with two separate device-specific keys, a first device specific key DSK1 and a second device-specific key DSK2, so that the first embodiment and the third embodiment are basically combined.

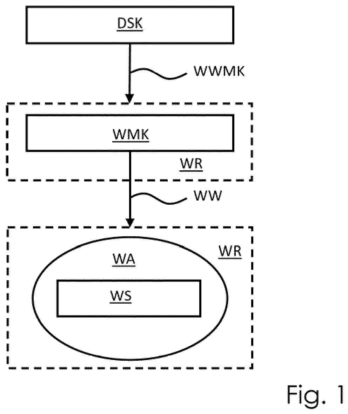

The first embodiment shown in fig. 1 details the first approach. Here, access to the wallet master key WMK which wraps WW a wallet WA is bound to a device-specific key DSK.

The device-binding of the device wallet WA is realized by binding access to the wallet master key WMK to a device-specific key DSK. The wallet master key WMK is wrapped WR using a wrapping algorithm WWMK or encrypted with this device-specific key DSK, so that only the correct device-specific key DSK can unwrap or decrypt the wrapped WR wallet master key WMK and use the wrapped WR wallet WA that together with its wallet secrets WS is wrapped WR with the wallet master key WMK. The device-specific key DSK could also be generated by different algorithms like DICE architecture, which is processed during a secure process.

The device-specific key DSK may be a secret key that is stored on a secure storage, like a secure element SE on the device. Or in a different variant, the device-specific key DSK may be a secret that is generated using intrinsic hardware and/or software properties of the device, like using a device hardware fingerprint, a physical unclonable function, etc. A good software and/or hardware binding mechanism used to generate a device-specific key DSK could be, for example, the DICE architecture, which is processed during a secure boot process of the device. Other secure boot mechanisms are also possible.

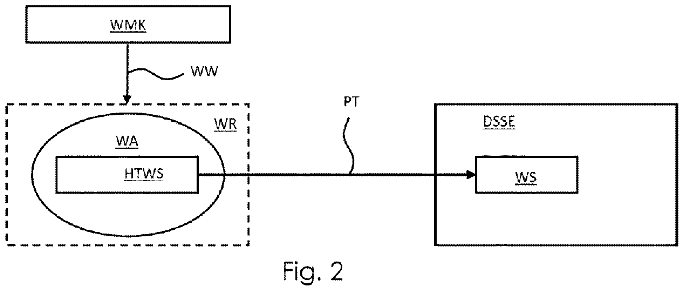

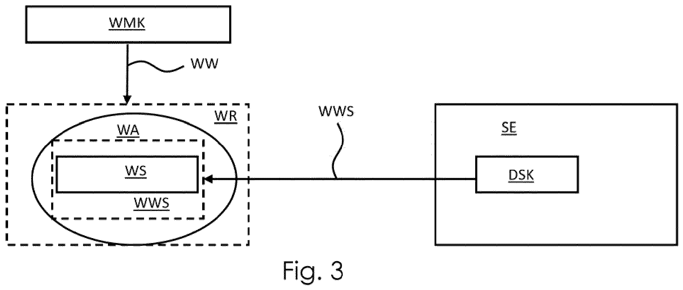

The second embodiment shown in fig. 2 and the third embodiment shown in fig. 3 are realized with another possibility to bind a wallet WA to a specific device. Here, the wallet secrets WS stored in the wallet WA themselves are bound to the device.

In the second embodiment shown in fig. 2, the wallet WA is wrapped WR by wrapping WW the wallet WA with the wallet master key WMK as known. As shown in fig. 2, the wallet secrets WS of the wallet WA, however, are created, stored, and used in a device-specific secure element DSSE or hardware trusted module. Since the wallet secrets WS represent the cryptographic core of the wallet WA, also the storing of the wallet secrets WS in the device-specific secure element DSSE may be considered as cryptographically binding the wallet WA to the specific industrial device.

When the wallet secrets WS are created, the wallet WA calls the device-specific secure element DSSE to generate the wallet secrets WS of the wallet WA. The secrets are created inside the device-specific Secure Element DSSE and never leave it in plain format. In the wallet WA, only key handles references HTWS that point PT to the wallet secrets WS stored in the device-specific secure element DSSE are stored. The usage of wallet secrets WS is only possible on the correct specific industrial device as all cryptographic operations with wallet secrets WS take place inside the device-specific secure element SE. Here, the owner of the wallet master key WMK could in principle be a different user, such as the device administrator.

The advantages of the second embodiment belonging to the second approach are listed as follows:
- The wallet secrets WS never leave the device's secure element SE in plain format. Operations with wallet secrets WS are transferred to a secure environment so that the wallet secrets WS would never be in plain format in the wallet core but only in the secure environment.
- The wallet secrets WS are bound to the device via the device-specific secure element SE, so that the wallet cannot be illegitimately copied to a counterfeited device. At least this would be harder for an attacker as physical access to the device would be necessary to transfer a secure element from one device to another.
- Access to the wallet is a combination of user and device authentication. The user authenticates with the Wallet Master Key WMK and the device authenticates with the device-specific Secure Element SE.

However, there is also an alternative embodiment shown in fig. 3, in which the wallet secrets WS of the wallet WA are bound to the industrial device.

Again in the embodiment depicted in fig. 3, a wallet master key WMK wraps WW the wallet WA to a wrapped WR wallet WA.

In this third embodiment depicted in fig. 3, however, not the wallet secrets WS themselves are stored inside a secure element SE, but a device-specific key DSK inside the secure element SE wraps the wallet secrets WS.

As in the second embodiment, also in the third embodiment, the wallet secrets WS are created in a secure element SE and never leave the secure element SE in plain format. But unlike in the second embodiment, the wallet secrets WS are not stored directly in the expensive secure memory of the secure element SE, but they are encrypted and decrypted with a device-specific key DSK that in turn is stored inside the secure element SE. Then, the wrapped WR wallet secrets WWS are returned to the wallet WA to be stored there. If a cryptographic operation with a wallet secret WS should be done, the wrapped wallet secret WWS is passed to the secure element SE, where it is decrypted with the device-specific key DSK. Then the wallet secret WS can be used inside the secure element SE.

For this third embodiment, the same advantages as for the second embodiment apply.

In contrast to the second embodiment, however, wallet secrets WS are stored wrapped WR outside the secure element SE, so that the limited and very expensive secure memory of the secure element SE need not to be used anymore.

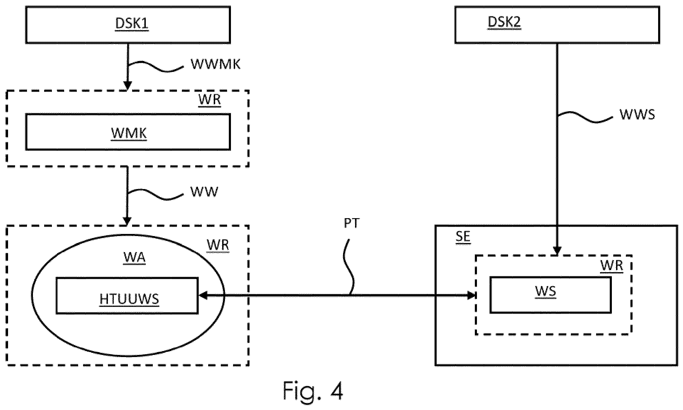

In the fourth embodiment shown in fig. 4, both the wallet master key WMK, that wraps WW the wallet WA and wallet secrets WS are bound to the device with a first device-specific key DSK1 and a second device-specific key DSK2, respectively. The fourth embodiment thus combines the first embodiment and the third embodiment. The first device-specific key DSK1 wraps WWMK the wallet master key WMK into a wrapped WR wallet master key WMK and the second device-specific key DSK2 wraps WWS the wallet secrets WS and thus creates wrapped wallet secrets WR.

This approach is an extension of the third embodiment and provides a higher security level by increasing the dependence on hardware binding of the first device-specific key DSK1 and the second device-specific key DSK2, which also comes with additional implementation overhead. It is worth mentioning that the first device-specific key DSK1 and the second device-specific key DSK2, which are used twice in this scenario, include various options such as physical unclonable functions, encrypted serial numbers, or hardware and software fingerprints from the applied devices. This approach's scenario is more suitable for multiple secure elements SE in devices containing the proposed wallet WA application.

In more details, in the fourth embodiment, the wallet secrets WS are stored wrapped as wrapped WR wallet secrets WS outside the wallet WA in a secure element SE, allowing a second device-specific key DSK2 to be used for the stored secrets WS.

When the wallet secrets WS are created, the wallet WA calls the secure element SE to generate the wallet secrets WS of the wallet WA. The secrets are created inside the secure element SE and never leave it in plain format. In the wallet WA, only key handles references HTUUWS that point PT to the wallet secrets WS stored in the device-specific secure element SE are stored. The usage of wallet secrets WS is only possible on the correct specific industrial device as all cryptographic operations with wallet secrets WS take place inside the device-specific secure element SE. Again as in the secodn , the owner of the wallet master key WMK could in principle be a different user, such as the device administrator.

The wallet WA application requires the first device-specific key DSK1 and the second device-specific key DSK2 to access the wallet secrets WS. The first DSK1 and the second device-specific key DSK2 increase the security of wallet secrets WS and the wallet master key WMK in case of physical attackers.

In the fourth embodiment, multiple secure elements SE with a first device-specific key 1 and a second device specific key 2, respectively, can be used.

In case of physical access to either the wallet WA entity or the secure element SE, the other entity will remain secure, as it depends on a different device-specific key of the pair of the first device-specific key DSK1 and the second device-specific key DSK2, which results in a higher security level.

## Claims

1. Industrial device comprising a wallet (WA) containing credentials (WS) for accessing industrial apps and equipped with a master key (WMK) securing the wallet (WA), the wallet (WA) being cryptographically bound to the specific industrial device.

2. Industrial device according to one of the preceding claims, wherein the wallet (WA) being cryptographically bound means that the master key (WMK) is cryptographically bound to the specific industrial device.

3. Industrial device according to the preceding claim, wherein the master key (WMK) is encrypted with a device-specific key (DSK).

4. Industrial device according to the preceding claim, wherein the device-specific key (DSK) is stored in a secure storage (SE) such as a device specific secure storage (DSSE), in particular a secure element.

5. Industrial device according to one of the two preceding claims, wherein the device-specific key (DSK) comprises a secret, that is generated using intrinsic hardware properties and/or software properties of the specific device, particularly a device hardware fingerprint and/or a physical unclonable function.

6. Industrial device according to one of the preceding claims, wherein the wallet (WA) being cryptographically bound means that the credentials (WS) contained in the wallet (WA) comprise at least one wallet secret (WS) and the at least one wallet secret (WS) is coupled to the specific device.

7. Industrial device according to the preceding claim, wherein the wallet secret (WS) is coupled to the specific device such that the wallet secret (WS) is stored inside a secure element (SE) of the specific device.

8. Industrial device according to the preceding claim, which is configured such, that the usage of the at least one wallet secret (WS) is limited to the secure element (SE).

9. Industrial device according to one of the preceding claims, wherein the at least one wallet secret (WS) is coupled to the specific device such that the at least one wallet secret (WS) is encrypted with a device specific key (DSK) that is stored inside a secure element (SE) of the device.

10. Industrial device according to one of the preceding claims, wherein the wallet (WA) being cryptographically bound to the specific device means that the master key (WMK) of the wallet (WA) is encrypted (WR) with a first device specific key (DSK1) and the at least one wallet secret (WS) is stored inside a secure element (SE) of the industrial device or at least one wallet secret (WS) is additionally encrypted with the second device specific key (DSK2).

11. Industrial device according to one of the preceding claims, wherein the industrial device is a manufacturing device, and the industrial app is a manufacturing app and/or the industrial device is a processing device, and the industrial app is a processing app and/or the industrial device is a logistics device, and the industrial app is a logistics app.
